# EUROPÄISCHE PATENTSCHRIFT

(11) **EP 1 151 657 B1**
(45) Veröffentlichungstag und Bekanntmachung des Hinweises auf die Patenterteilung: **21.06.2006**
(21) Anmeldenummer: 01110211.8
(22) Anmeldetag: 25.04.2001
(51) Int. Cl.: A01F 15/08

(54) **Rundballenpresse für landwirtschaftliche Halmgüter**
Rotobaler for agricultural products
Presse à balles rondes pour des produits agricoles

(30) Priorität: 02.05.2000 DE 10021352
(43) Veröffentlichungstag der Anmeldung: 07.11.2001
(73) Patentinhaber: Welger Maschinenfabrik GmbH, 38304 Wolfenbüttel (DE)
(72) Erfinder: Honhold, Joost, 38302 Wolfenbüttel (DE)

(56) Entgegenhaltungen:
- EP-A- 0 264 328
- EP-A- 0 391 804
- DE-A- 3 607 040
- DE-C- 4 315 374
- US-A- 4 889 047

## Beschreibung

Die Erfindung betrifft eine Rollballenpresse nach dem Oberbegriff des Patentanspruches 1.

Eine Rollballenpresse dieser Art ist bekannt (DE 82 13 107.4 U1). Die Funktion derartiger Ballenabrollvorrichtungen hat sich in der Praxis bei Ballendurchmessern zwischen 1,25 m und 1,5 m bewährt. Bei größeren Ballendurchmessern ist das Entladen jedoch problematisch. Größere Ballen greifen weiter in den Schwenkbereich des Hintergehäuses ein und behindern das Schließen des Hintergehäuses, weil die längeren und relativ geringer geneigten Ballenrampen nicht ausreichen, um den Rollballen entsprechend weit abrollen zu lassen. Schwere Silageballen bleiben sogar auf dem äußeren Ende der Ballenabrollvorrichtung liegen, so dass diese nicht nach oben schwenken und das Hintergehäuse nicht geschlossen werden kann. Darüber hinaus steht diese Ballenabrollvorrichtung relativ weit nach hinten über die Rollballenpresse über, so dass Gefährdungen im Straßenverkehr auftreten können. Da auf der gleichen Ballenrampe bei Rollpressen mit variablem Pressraum neben Ballen mit einem Durchmesser von bis zu 2 m auch kleinere Ballen mit einem Durchmesser von etwa 1,2 m abrollen sollen, ist der Hangbetrieb, insbesondere bergaufwärts problematisch, weil kleinere Ballen zu weit wegrollen.

Aus der DE-A-3 607 040 ist eine Rollenballenpresse mit einer Ballenabrollvorrichtung bekannt, die für der straßentransport einfahrbar ist.

In der EP 0 104 510 B1 ist eine Ballenschiebevorrichtung für Rollballenpressen dargestellt und beschrieben, welche um eine obere, zur Schwenkachse des Hintergehäuses koaxial gelegene Achse schwenkbar ist. Die Ballenschiebevorrichtung ist U-förmig gestaltet und soll den unmittelbar nach dem Öffnen des Hintergehäuses auf den Erdboden gefallenen Ballen aus dem Schwenkbereich des Hintergehäuses nach hinten schieben. Abgesehen von dem hohen konstruktiven Aufwand, ist auch diese Vorrichtung problematisch bei unterschiedlichen Ballendurchmessern, weil der Anlenkpunkt der Ballenschiebeeinrichtung, der Angriffspunkt am Ballen in weggeschobener Stellung und der Ballenmittelpunkt ungefähr auf einer Geraden liegen müssen, wenn der Schwenkbereich des Hintergehäuses frei sein soll. Dieses bedeutet, dass die Ballenschiebeeinrichtung bei unterschiedlichen Ballendurchmessern in verschiedenen Winkellagen am Ballen anliegen muss. Darüber hinaus arbeiten Hintergehäuse und Ballenschiebeeinrichtung nacheinander, so dass der Ballenausstoß lange dauert. Hangaufwärts besteht der gleiche Nachteil wie bei der erstgenannten Vorrichtung.

Eine vergleichbare, sehr bauaufwendige Vorrichtung ist durch die US-PS 5,263,410 vorbekannt. Diese Vorrichtung ist an einem Kurbelschwingengetriebe um untere, gestellfeste Achsen schwenkbar. Außerdem ist die den Ballen berührende Querstange höheneinstellbar zur Anpassung an unterschiedliche Ballendurchmesser.

Beide letztgenannten Vorrichtungen weisen konstruktiv den großen Nachteil auf, dass der Rollballen über einen relativ langen Weg weggerollt werden muss, weil dieser unmittelbar hinter der Rollballenpresse nach unten fällt, dabei in seiner ursprünglichen Drehrichtung abgebremst und dann durch die Ballenschiebeeinrichtung in entgegengesetzter Drehrichtung nach hinten gerollt wird.

Der Erfindung liegt die Aufgabe zugrunde, die eingangs beschriebene Vorrichtung dahingehend zu verbessern, dass das Schließen des Hintergehäuses beim Entladen von Rollballen mit unterschiedlichen Durchmessern, insbesondere großem Durchmesser, gewährleistet ist.

Ausgehend von der eingangs beschriebenen Vorrichtung wird diese Aufgabe gemäß der Erfindung dadurch gelöst, dass Mittel vorgesehen sind, um die Ballenabrollvorrichtung in Abhängigkeit von underschiedlichen Ballendurchmessern unter Kraftbeaufschlagung ein- und auszufahren.

Die Grundlänge der Ballenabrollvorrichtung kann so ausgelegt werden, dass diese bis zu einem bestimmten Ballendurchmesser optimal arbeitet. Erst bei größeren Ballendurchmessern wird die Ballenabrollvorrichtung teleskopartig ausgefahren, um in ihrer oberen Stellung bei geöffnetem Hintergehäuse den Rollballen aus dem Schwenkbereich des Hintergehäuses zu schieben. Diese Funktion kann bei Bedarf, z. B. bei Betrieb hangaufwärts, ganz abgeschaltet werden. Gefährdungen im Straßenverkehr werden vermieden, da die Ballenabrollvorrichtung in ihrer Grundlänge nicht verändert wurde. Grundsätzlich ist es aber auch möglich, während des Betriebes die Ballenabrollvorrichtung ständig in ausgefahrener Position zu belassen und nur nach Abrollen eines Rollballens etwa in ihrer unteren Stellung vorübergehend einzufahren und in ihrer oberen Stellung zum Wegschieben des Rollballens wieder auszufahren. Bei Straßenfahrt ist die Ballenabrollvorrichtung stets eingefahren. Die erfindungsgemäße Vorrichtung vereint somit die Vorteile der Ballenabrollvorrichtung mit den Vorteilen der Ballenschiebeeinrichtung, vermeidet aber deren Nachteile. Bei Straßenfahrt oder bei Betrieb hangaufwärts ist die Funktion des Ein- und Ausfahrens der Ballenabrollvorrichtung ausgeschaltet. Durch die geradlinige Verschiebbarkeit der Ballenabrollvorrichtung stützen sich die Schiebekräfte am Gestell ab, so dass die Vorrichtung einen geringen Bauaufwand hat.

Weitere Merkmale der Erfindung ergeben sich aus den Unteransprüchen.

Zwei Ausführungsformen der Rollballenpresse werden im folgenden anhand der Zeichnung näher erläutert. Es zeigt
- Fig. 1: die Rollballenpresse in Seitenansicht mit einer erfindungsgemäßen Ballenabrollvorrrichtung in ein- und ausgefahrener Position bei geöffnetem Hintergehäuse und
- Fig. 2: eine Ansicht gemäß Fig. 1 mit einer anderen Ausführungsform einer Ballenabrollvorrichtung.

Die Rollballenpresse besitzt ein zweiteiliges Pressengehäuse, bestehend aus einem Vordergehäuse 1, welches gestellfest auf einem Fahrgestell 2 ruht und einem Hintergehäuse 3, welches um eine obere Schwenkachse 4 zum Ballenausstoß in eine Entladestellung 5 aufklappbar ist.

Das Vordergehäuse 1 weist in einem der Ballenbreite entsprechenden Abstand nebeneinander zwei vordere Seitenwände 6 auf, die durch nicht dargestellte Querverbindungen miteinander verbunden sind. Das Hintergehäuse 3 besitzt zwei hintere Seitenwände 8, die in gleichem Abstand wie die vorderen Seitenwände 6 angeordnet sind und in nicht dargestellter, geschlossener Stellung des Pressengehäuses auf beiden Seiten jeweils mit ihrer Vorderkante 10 an den vorderen Seitenwänden 6 anliegen. Am Vordergehäuse 1 greift eine Zugdeichsel 11 an zur Verbindung mit einem nicht dargestellten Schlepper. Die Rollballenpresse ist über eine nicht dargestellte Gelenkwellenverbindung antriebsmäßig mit dem Schlepper zu koppeln. Die Öffnung des Hintergehäuses 3 erfolgt durch am Vorder- 1 und Hintergehäuse 3 angelenkte Hydrozylinder 12, während für die Verriegelung von Vorder- 1 und Hintergehäuse 3 Verriegelungshaken 13 vorgesehen sind, die in Zapfen 14 einrasten.

Im Pressengehäuse wird ein Pressraum 15, dessen Durchmesser sich bei der Herstellung eines Ballens vergrößern kann, von Presselementen in Form von Riemen 16, die über eine Vielzahl von Rollen 17 geführt sind und von ortsfesten, aber angetriebenen Presswalzen 18 gebildet, wie dies bekannt ist.

Zwischen zwei Presswalzen 18, 19 ist eine Zuführöffnung 20 für Erntematerial freigelassen. Der Zuführöffnung 20 ist ein an sich bekannter Aufsammler 21 mit einem Zwischenförderer 22 vorgeschaltet, die beide während des Betriebes in durch Pfeile 23 gekennzeichnete Richtungen bewegt werden.

Der Pressraum 15 kann sowohl von Walzen, Stabkettenförderem wie auch von Riemen oder Mischformen davon begrenzt werden und von veränderlicher wie von konstanter Größe sein - die Bauart ist für die vorliegende Erfindung unwesentlich.

Die Rollballenpresse ist mit einer erfindungsgemäßen Ballenabrollvorrichtung 24 versehen, die sich in diesem Ausführungsbeispiel im wesentlichen aus zwei geradlinig längenveränderbaren Auslegern 25 und zwei Betätigungsvorrichtungen 26 zusammensetzt, wobei jeweils nur ein Ausleger 25 und eine Betätigungsvorrichtung 26 gezeigt sind, während die jeweils zweiten deckungsgleich und in spiegelbildlicher Anordnung dazu vorgesehen sind.

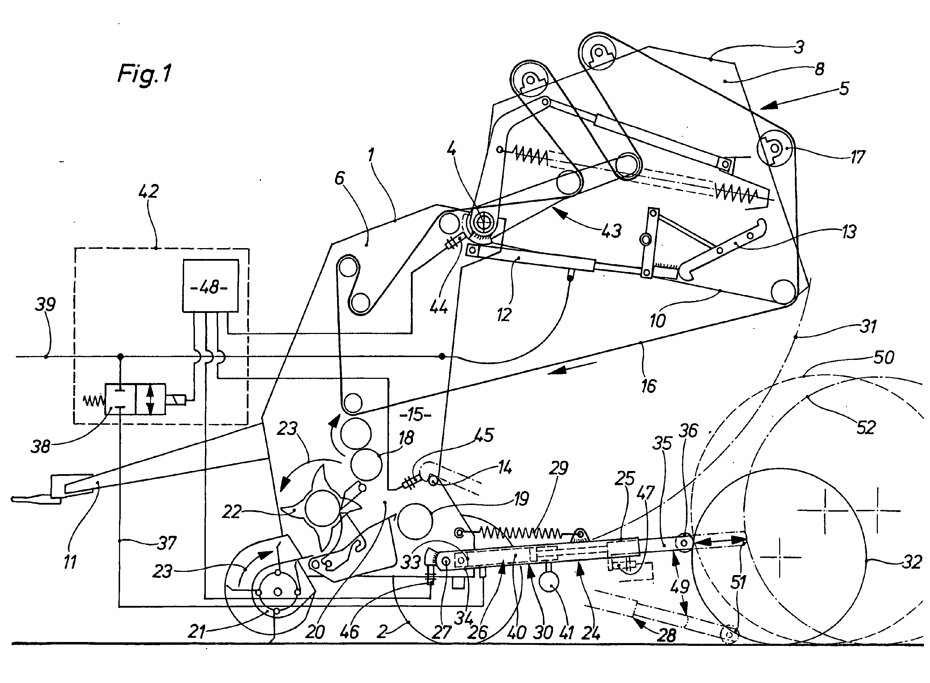

Die Ausleger 25 sind um Zapfen 27 am Vordergehäuse 1 oder am Fahrgestell 2 schwenkbar gelagert, so dass diese in ihrer unteren Stellung 28 eine schiefe Ebene für einen darauf abrollenden Rollballen bilden, die so steil ist, dass der Rollballen aus dem Schwenkbereich des Hintergehäuses 3 rollt. Die Auslegerlänge, d. h. der Abstand zwischen Zapfen 27 und Auslegerende ist so gewählt, dass die Ausleger 25 in ihrer oberen, durch eine Zugfeder 29 gehaltenen und durch verstellbaren, nicht dargestellten Anschlag begrenzten Stellung 30 einen Rollballen bis zu etwa 1,3 m Ballendurchmesser sicher außerhalb des Schwenkbogens 31 des Hintergehäuses 3 hält, siehe den in Figur 1 dargestellten Ballen 32 von etwa 1,3 m Durchmesser.

Der Ausleger 25 besteht aus zwei ineinander verschiebbaren Rohren 34, 35, Mehrkantprofilen oder ähnlichen geradlinigen Schiebeführungen, welche durch einen doppeltwirkenden Hydrozylinder 33 miteinander verbunden sind. In dem ortsfesten aber um den Zapfen 27 schwenkbaren Rohr 34 ist ein Schiebestück 35 gelagert, das am Ende eine parallel zu dem Zapfen 27 angeordnete, frei drehbare Rolle 36 aufweist, die am Ballen 32 zum Angriff kommt und zur Reduzierung der Flächenpressung möglichst groß sein sollte. Das Schiebestück 35 kann auch als Stößel ausgestaltet sein mit einem Druckteller. Beide Schiebestücke 35 zweier im Abstand nebeneinander angeordneter Ausleger 25 können auch durch eine nicht dargestellte Querstange miteinander verbunden sein, die über ihre gesamte Breite eine freie drehbare Rolle trägt und einen Abrollbügel bilden. Der Hydrozylinder 33 ist zylinderraumseitig an eine Ölleitung 37 mit einem 2/2 Wegeventil 38 verbunden, die an eine gemeinsame Druckleitung 39 für die Hydrozylinder 12 angeschlossen ist. An dem kolbenstangenseitigen Zylinderraum 40 ist ein Hydrospeicher 41 angeschlossen. Das 2/2 Wegeventil 38 ist Bestandteil einer elektrohydraulischen Steuereinrichtung, die allgemein mit der Ziffer 42 gekennzeichnet ist.

Die Steuereinrichtung 42 hat in diesem Ausführungsbeispiel vier Eingangsgrößen: Einen einer Riemenspanneinrichtung 43 zugeordneten Messsensor 44 für den Ballendurchmesser, z. B. Drehpotentiometer, einen Sensor 45, z. B. induktiven Näherungssensor für die geschlossene Stellung des Hintergehäuses 3, der mit dem Verriegelungshaken 13 zusammenwirkt, einen Positionssensor 46 für die obere 30 bzw. untere Stellung 28 der Ballenabrollvorrichtung 24 und einen Sensor 47 für die Einfahr- und Ausfahrposition der Ballenabrollvorrichtung 24. Von der Steuereinrichtung 42 führen Steuerleitungen zum 2/2 Wegeventil 38. An einem Steuer- und/oder Bediengerät 48 sind Sollparameter voreinstellbar, zumindest der Ballendurchmesser, ab dem die Ballenabrollvorrichtung 24 ein- und ausfahren soll.

### Die Arbeitsweise der erfindungsgemäßen Rollballenpresse ist wie folgt:

Zunächst stellt man an dem Steuer- und/oder Bediengerät 48 den Ballendurchmesser ein, ab dem die Ballenabrollvorrichtung 24 ein- und ausfahren soll. Bis zu diesem Ballendurchmesser arbeitet die Ballenabrollvorrichtung 24 in bekannter Weise. Wird ein größerer Ballendurchmesser in der Rollballenpresse gepresst, gibt der Sensor 44 ein Signal an die Steuereinrichtung 42 ab. Die Ballenabrollvorrichtung 24 befindet sich während des Pressbetriebes in eingefahrener, in Fig. 1 in Volllinie dargestellter Position 49. Nach dem Öffnen des Hintergehäuses 3 wird der Rollballen ausgestoßen, rollt über die Ballenabrollvorrichtung 24, drückt diese nieder und liegt in der in Strichlinie gezeigten Ballenposition 50 mit einem Teilbereich im Schwenkbogen 31 des Hintergehäuses 3. Die Ballenabrollvorrichtung 24 wird durch die Feder 29 hochgezogen. In ihrer oberen Stellung 30 gibt der Sensor 46 ein Signal an die Steuereinrichtung 42, die bewirkt, dass das 2/2 Wegeventil 38 auf Durchfluss geschaltet und die Ballenabrollvorrichtung 24 in die in Strichpunktlinie dargestellte, ausgefahrene Position 51 bewegt wird. Dabei schiebt die Ballenabrollvorrichtung 24 den Rollballen in die in Strichpunktlinie dargestellte Ballenposition 52 außerhalb des Schwenkbogens 31 des Hintergehäuses 3, so dass dieses geschlossen werden kann. In geschlossener Stellung oder während des Schließens des Hintergehäuses 3 gibt der Sensor 45 ein Signal zum Einfahren der Ballenabrollvorrichtung 24 in ihre in Volllinie dargestellte Position 49. Die Ausfahrbewegung der Ballenabrollvorrichtung 24 in ihrer oberen Stellung 30 kann durch Sensor 47 dazu genutzt werden, um die Schließbewegung des Hintergehäuses 3 automatisch auszulösen.

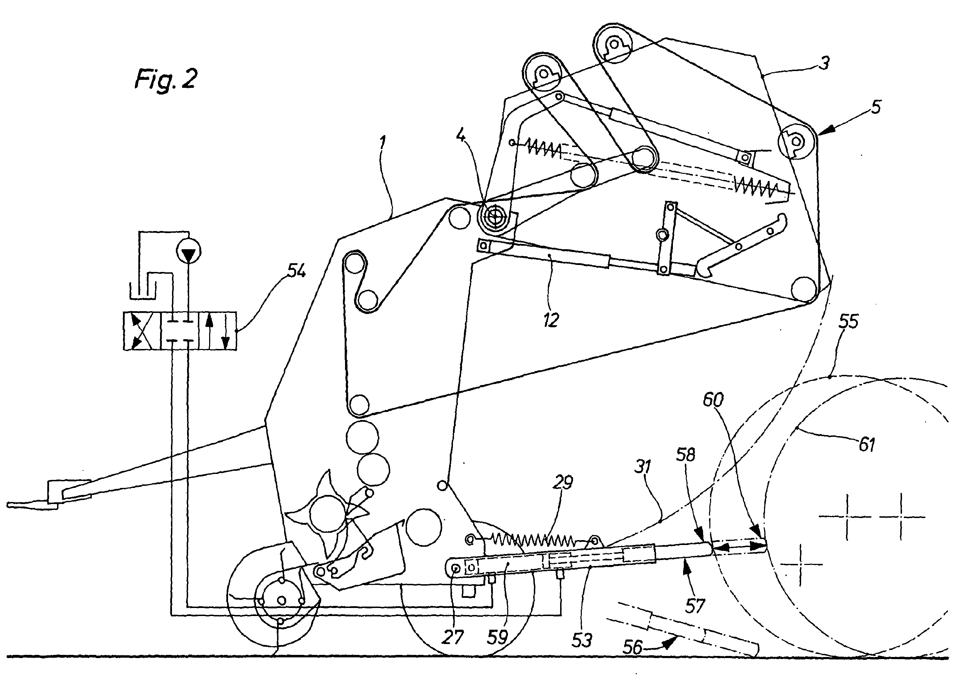

Bei dem in Figur 2 gezeigten Ausführungsbeispiel wird eine Ballenabrollvorrichtung 53 durch ein 4/3 Wegeventil 54 gesteuert, das in Wirkverbindung mit der im ersten Ausführungsbeispiel dargestellten und beschriebenen, in Fig. 2 aber weggelassenen Steuereinrichtung 42 und Sensorik steht und wie folgt arbeitet: Nach Öffnen des Hintergehäuses 3 wird der Rollballen ausgestoßen, läuft über die ausgefahrene Ballenabrollvorrichtung 53, drückt diese nieder und bleibt in der gestrichelt gezeichneten Ballenposition 55 liegen, in der der Rollballen den Schwenkbogen 31 des Hintergehäuses 3 schneidet und die Ballenabrollvorrichtung 53 nicht hochgehen kann. Der Sensor 46 gibt in der unteren Stellung 56 der Ballenabrollvorrichtung 53 ein Signal an die Steuereinrichtung 42, worauf die Ballenabrollvorrichtung 53 in ihre in Figur 2 in Volllinie dargestellte eingefahrene Position 57 zurückfährt, so dass diese unter dem Zug der Feder 29 in ihre obere Stellung 58 hochgezogen wird, in der sich diese ungefähr auf Höhe der horizontalen Mittelebene des Rollballens befindet. Durch das Hochschwenken der Ballenabrollvorrichtung 53 gibt der Sensor 46 in der oberen Stellung 58 ein Signal an die Steuereinrichtung 42, das bewirkt, dass der Steuerkolben des 4/3 Wegeventils 54 nach links geschoben wird. In dieser Ventilstellung wird der kolbenseitige Zylinderraum des Hydrozylinders 59 mit Drucköl beaufschlagt, wodurch die Ballenabrollvorrichtung 53 in ihre in Strichpunktlinie gezeichnete, ausgefahrene Position 60 bewegt und dabei gleichzeitig der Rollballen in seine in Strichpunktlinie dargestellte Position 61 geschoben wird, in der dieser außerhalb des Schwenkbogens 31 des Hintergehäuses 3 gehalten wird. Die Ballenabrollvorrichtung 53 bleibt in dieser ausgefahrenen Position 60, so dass der Rollballen auch hangabwärts nicht in den Schwenkbereich des Hintergehäuses 3 rollen und das Schließen des Hintergehäuses 3 gewährleistet ist.

## Patentansprüche

1. Rollballenpresse für landwirtschaftliche Halmgüter, bestehend aus einem gestellfesten Vordergehäuse (1) und einem an diesem um eine obere horizontale Achse (4) zum Ballenausstoß in eine Entladestellung (5) aufklappbar gelagerten Hintergehäuse (3), wobei eine um eine untere horizontale, quer zur Abrollrichtung eines Rollballens gelegene Achse (27) schwenkbar am Vordergehäuse (1) angelenkte, ein- und ausfahrbare Ballenabrollvorrichtung (24, 58) vorgesehen ist, welche in einer unteren Stellung (28) eine schiefe Ebene zum Abrollen des Rollballens bildet und in einer oberen Stellung (30) den Rollballen aus dem Schwenkbereich des Hintergehäuses (3) fernhält, **dadurch gekennzeichnet, dass** Mittel (33 bis 36, 38, 41, 42, 54, 59) vorgesehen sind, um die Ballenabrollvorrichtung (24, 53) in Abhängigkeit von unterschiedlichen Ballendurchmessern unter Kraftbeaufschlagung ein- und auszufahren.

2. Rollballenpresse nach Anspruch 1, **dadurch gekennzeichnet, dass** sich die Ballenabrollvorrichtung (24) in ihrer oberen Stellung (30) in eingefahrener Position (49) befindet und unter Kraftbeaufschlagung soweit in ihre ausgefahrene Position (51) verschoben wird, dass der Rollballen aus dem Schwenkbereich des Hintergehäuses (3) gerollt wird.

3. Rollballenpresse nach Anspruch 1 oder 2, **dadurch gekennzeichnet, dass** die Funktion des Ein- und Ausfahrens der Ballenabrollvorrichtung (24, 53) ein- und ausschaltbar ist.

4. Rollballenpresse nach Anspruch 1, 2, oder 3, **dadurch gekennzeichnet, dass** die Ballenabrollvorrichtung (24) spätestens in geschlossener Stellung des Hintergehäuses (3) wieder in ihrer eingefahrenen Position (49) ist.

5. Rollballenpresse nach Anspruch 1, 2 oder 3, **dadurch gekennzeichnet, dass** die Ballenabrollvorrichtung (53) nach dem Schließen des Hintergehäuses (3) in ihrer oberen Stellung (58) in ausgefahrener Position (60) verbleibt und nur jeweils nach Abrollen eines Rollballens in ihrer unteren Stellung (56) oder während des Verschwenkens in die obere Stellung (58) oder in dieser vorübergehend eingefahren und in der oberen Stellung (58) wieder ausgefahren wird.

6. Rollballenpresse nach einem oder mehreren der vorhergehenden Ansprüche, **dadurch gekennzeichnet, dass** die Ballenabrollvorrichtung (24, 53) in ihrer oberen Endstellung (30, 58) während des Wegschiebens des Rollballens etwa in horizontaler Mittelebene am Rollballen angreift.

7. Rollballenpresse nach einem oder mehreren der vorhergehenden Ansprüche, **dadurch gekennzeichnet, dass** die Rollballenpresse wahlweise mit ständig eingefahrener oder ständig ausgefahrener Ballenabrollvorrichtung (24, 53) betreibbar ist.

8. Rollballenpresse nach einem oder mehreren der vorhergehenden Ansprüche, **dadurch gekennzeichnet, dass** die Ballenabrollvorrichtung (24, 53) erst ab Überschreiten eines voreinstellbaren Ballendurchmessers aus- und eingefahren wird.

9. Rollballenpresse nach einem oder mehreren der vorhergehenden Ansprüche, **dadurch gekennzeichnet, dass** die Ballenabrollvorrichtung (24, 53) von wenigstens einer schwenkbaren, gefederten Rampe (25, 29, 34 bis 36) gebildet wird, welche längenveränderbar gestaltet ist.

10. Rollballenpresse nach Anspruch 9, **dadurch gekennzeichnet, dass** zwei Rampen (25) im Abstand nebeneinander angeordnet und gegenüberliegend von ihrer Schwenkachse (27) durch einen Quersteg verbunden sind, so dass diese einen U-förmigen Bügel bilden.

11. Rollballenpresse nach Anspruch 9 oder 10, **dadurch gekennzeichnet, dass** das dem Rollballen zugewandte Rampenende wenigstens eine frei drehbare, am Rollballen angreifende Rolle (36) aufweist oder als Stößel mit größerem Durchmesser ausgebildet ist zur Reduzierung der Flächenpressung am Rollballen.

12. Rollballenpresse nach Anspruch 9, 10 oder 11, **dadurch gekennzeichnet, dass** die Rampe (25) teleskopartig ausgebildet ist.

13. Rollballenpresse nach einem oder mehreren der vorhergehenden Ansprüche, **gekennzeichnet durch** hydraulische, mechanische, elektrische und / oder pneumatische Mittel (33, 41, 59) zum Ein- und Ausfahren der Ballenabrollvorrichtung (24).

14. Rollballenpresse nach einem oder mehreren der vorhergehenden Ansprüche, **dadurch gekennzeichnet, dass** die Ballenabrolleinrichtung (24, 53) eine elektrohydraulische Steuereinrichtung (42) mit einem Steuer- und/oder Bediengerät (48) aufweist, welches in Wirkverbindung steht mit einem Sensor (44) für den Ballendurchmesser, einem Sensor (45) für die Position des Hintergehäuses (3), einem Sensor (46) für die Position der Ballenabrollvorrichtung (24, 53) und/oder einem Sensor (47) für ihre Einfahr- und Ausfahrposition sowie wenigstens einem elektrohydraulischen Ventil (38, 54).

15. Rollballenpresse nach einem oder mehreren der vorhergehenden Ansprüche, **gekennzeichnet durch** einen variablen Pressraum (15) zur Erzeugung von Rollballen mit unterschiedlichem Ballendurchmesser.

## Claims

1. Rotobaler for agricultural straw products, comprising a front housing (1), which is fixed to the frame, and a rear housing (3) which is mounted on the latter so as to be able to open into an unloading position (5) about an upper horizontal axis (4) for ejecting the bale, a bale-rolling device (24, 58) being provided which is pivotable about a lower horizontal axis (27) situated transversely relative to the rolling direction of a rolled bale, is coupled to the front housing (1) and is retractable and extendable, said bale-rolling device forming, in a lower position (28), an inclined plane for rolling off the rolled bale and, in an upper position (30), keeping the bale out of the pivot region of the rear housing (3), **characterised in that** means (33 to 36, 38, 41, 42, 54, 59) are provided in order to retract and extend the bale-rolling device (24, 53) with the application of force as a function of different bale diameters.

2. Rotobaler according to claim 1, **characterised in that** the bale-rolling device (24) in its upper position (30) is situated in the retracted position (49) and is pushed with the application of force so far into its extended position (51) that the rolled bale is rolled out of the pivot region of the rear housing (3).

3. Rotobaler according to claim 1 or 2, **characterised in that** the function of retraction and extension of the bale-rolling device (24, 53) can be switched on and off.

4. Rotobaler according to claim 1, 2 or 3, **characterised in that** the bale-rolling device (24) is back in its retracted position (49) at the latest in the closed position of the rear housing (3).

5. Rotobaler according to claim 1, 2, or 3, **characterised in that** the bale-rolling device (53), after the rear housing (3) has closed, remains in its upper position (58) in the extended position (60) and is only retracted, respectively after a bale has rolled off, in its lower position (56) or during pivoting into the upper position (58) or when temporarily in the latter and is extended again in the upper position (58).

6. Rotobaler according to one or more of the preceding claims, **characterised in that** the bale-rolling device (24, 53) in its upper end position (30, 58) engages on the rolled bale approximately in the horizontal central plane when the bale is being pushed away.

7. Rotobaler according to one or more of the preceding claims, **characterised in that** the rotobaler can be operated optionally with a constantly retracted or constantly extended bale-rolling device (24, 53).

8. Rotobaler according to one or more of the preceding claims, **characterised in that** the bale-rolling device (24, 53) is extended and retracted only after exceeding a prescribable bale diameter.

9. Rotobaler according to one or more of the preceding claims, **characterised in that** the bale-rolling device (24, 53) is formed by at least one pivotable, sprung ramp (25, 29, 34 to 36) which is configured to be variable in length.

10. Rotobaler according to claim 9, **characterised in that** two ramps (25) are disposed adjacently at a spacing and, situated opposite their pivot axis (27), are connected by a transverse web so that these form a U-shaped hoop.

11. Rotobaler according to claim 9 or 10, **characterised in that** the ramp end orientated towards the rolled bale has at least one freely rotatable roller (36) which engages on the rolled bale or is configured as a ram with a greater diameter in order to reduce the surface pressure on the bale.

12. Rotobaler according to claim 9, 10 or 11, **characterised in that** the ramp (25) has a telescopic configuration.

13. Rotobaler according to one or more of the preceding claims, **characterised by** hydraulic, mechanical, electrical and/or pneumatic means (33, 41, 59) for retracting and extending the bale-rolling device (24).

14. Rotobaler according to one or more of the preceding claims, **characterised in that** the bale-rolling device (24, 53) has an electrohydraulic control device (42) with a control and/or operating unit (48) which is in operational connection with a sensor (44) for the bale diameter, a sensor (45) for the position of the rear housing (3), a sensor (46) for the position of the bale-rolling device (24, 53) and/or a sensor (47) for its retraction and extension position and also at least one electrohydraulic valve (38, 54).

15. Rotobaler according to one or more of the preceding claims, **characterised by** a variable pressing chamber (15) for producing rolled bales with different bale diameters.

## Revendications

1. Presse à balles rondes pour des produits agricoles de type paille, constituée d'une chambre avant (1) fixe par rapport au châssis, et d'une chambre arrière (3) disposée de manière à pouvoir basculer sur celle-ci, autour d'un axe horizontal supérieur (4) pour expulser les balles dans une position de déchargement (5), moyennant quoi il est prévu un dispositif dérouleur de balles (24, 58) pouvant être rabattu et déployé, articulé sur la chambre avant (1) en pouvant pivoter autour d'un axe horizontal inférieur (27), transversalement par rapport à la direction de déroulement d'une balle ronde, lequel dispositif dérouleur, dans une position abaissée (28), forme un plan oblique pour dérouler la balle ronde et, dans une position relevée (30), maintient la balle ronde à l'écart de la zone de pivotement de la chambre arrière (3),
**caractérisée en ce que** des moyens (33 à 36, 38, 41, 42, 54, 59) sont prévus pour rabattre et déployer le dispositif dérouleur de balles (24, 53) en fonction des différents diamètres de balles, sous l'effet d'une force.

2. Presse à balles rondes selon la revendication 1, **caractérisée en ce que** le dispositif dérouleur de balles (24) se trouve à l'état rabattu (49) lorsqu'il est en position relevée (30), et il se déplace vers son état déployé (51) sous l'effet d'une force, jusqu'à ce que la balle ronde roule hors de la zone de pivotement de la chambre arrière (3).

3. Presse à balles rondes selon l'une quelconque des revendications 1 ou 2, **caractérisée en ce que** la fonction consistant à rabattre et à déployer le dispositif dérouleur de balles (24, 53) peut être enclenchée et arrêtée.

4. Presse à balles rondes selon l'une quelconque des revendications 1, 2 ou 3, **caractérisée en ce que** le dispositif dérouleur de balles (24) revient dans son état rabattu (49), au plus tard quand la chambre arrière (3) se trouve dans la position fermée.

5. Presse à balles rondes selon l'une quelconque des revendications 1, 2 ou 3, **caractérisée en ce que** le dispositif dérouleur de balles (53) reste à l'état déployé (60) dans la position relevée (58) après la fermeture de la chambre arrière (3), **en ce que** c'est seulement après le déroulement d'une balle ronde dans sa position abaissée (56) ou pendant le pivotement vers la position relevée (58) respectivement qu'il est temporairement rabattu dans celle-ci, et redéployé dans la position relevée (58).

6. Presse à balles rondes selon une ou plusieurs des revendications précédentes, **caractérisée en ce que** le dispositif dérouleur de balles (24, 53), dans sa position finale relevée (30, 58), durant l'éjection de la balle ronde, saisit la balle ronde quasiment dans le plan médian horizontal.

7. Presse à balles rondes selon une ou plusieurs des revendications précédentes, **caractérisée en ce que** la presse à balles rondes peut être actionnée au choix avec le dispositif dérouleur de balles (24, 53) constamment rabattu ou avec le dispositif dérouleur de balles (24, 53) constamment déployé.

8. Presse à balles rondes selon une ou plusieurs des revendications précédentes, **caractérisée en ce que** le dispositif dérouleur de balles (24, 53) n'est déployé et rabattu que lorsqu'un diamètre de balle pouvant être prédéfini a été dépassé.

9. Presse à balles rondes selon une ou plusieurs des revendications précédentes, **caractérisée en ce que** le dispositif dérouleur de balles (24, 53) est formé au moins par une rampe (25, 29, 34 à 36) pouvant pivoter, actionnée par des ressorts, qui est agencée de manière à pouvoir être réglée en longueur.

10. Presse à balles rondes selon la revendication 9, **caractérisée en ce que** deux rampes (25) sont disposées l'une à côté de l'autre en étant séparées d'une certaine distance, et sont reliées par une barre transversale à l'opposé de leur axe de pivotement (27), de telle sorte qu'elles forment un étrier en forme de U.

11. Presse à balles rondes selon l'une quelconque des revendications 9 ou 10, **caractérisée en ce que** l'extrémité de rampe orientée vers la balle ronde présente au moins un rouleau (36) qui peut tourner librement, saisissant la balle ronde, ou est configurée sous forme de coulisseau de diamètre supérieur afin de réduire la pression spécifique sur la balle ronde.

12. Presse à balles rondes selon l'une quelconque des revendications 9, 10 ou 11, **caractérisée en ce que** la rampe (25) est configurée de manière télescopique.

13. Presse à balles rondes selon une ou plusieurs des revendications précédentes, **caractérisée en ce qu'**elle comprend des moyens hydrauliques, mécaniques, électriques et / ou pneumatiques (33, 41, 59) pour rabattre et déployer le dispositif dérouleur de balles (24).

14. Presse à balles rondes selon une ou plusieurs des revendications précédentes, **caractérisée en ce que** le dispositif dérouleur de balles (24, 53) présente un dispositif de commande (42) électrohydraulique avec un appareil de commande et / ou de manoeuvre (48), lequel coopère avec un capteur (44) pour le diamètre des balles, un capteur (45) pour la position de la chambre arrière (3), un capteur (46) pour la position du dispositif dérouleur de balles (24, 53) et / ou un capteur (47) pour la position rabattue et / ou déployée, et au moins une soupape électrohydraulique (38, 54).

15. Presse à balles rondes selon une ou plusieurs des revendications précédentes, **caractérisée par** un espace de compression variable (15) afin d'obtenir des balles rondes ayant des diamètres de balles différents.
